(19)

Europäisches
Patentamt
European
Patent Office
Office européen
des brevets

(11) **EP 1 840 603 A1**

(12) **EUROPEAN PATENT APPLICATION**
published in accordance with Art. 158(3) EPC

(43) Date of publication:
**03.10.2007 Bulletin 2007/40**

(21) Application number: **05814136.7**

(22) Date of filing: **07.12.2005**

(51) Int Cl.:
**G02B 5/30** *(2006.01)*        **G02F 1/1335** *(2006.01)*

(86) International application number:
**PCT/JP2005/022424**

(87) International publication number:
**WO 2006/064693 (22.06.2006 Gazette 2006/25)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **16.12.2004 JP 2004364290**

(71) Applicant: **TORAY INDUSTRIES, INC.
Tokyo 103-8666 (JP)**

(72) Inventors:
• **TAKAHASHI, Hiromitsu**
  **5202145 (JP)**
• **AOYAMA, Shigeru**
  **5202101 (JP)**
• **TAKAHASHI, Kozo**
  **5200842 (JP)**

(74) Representative: **Kador & Partner
Corneliusstrasse 15
80469 München (DE)**

(54) **POLARIZING PLATE, METHOD OF PRODUCING THE POLARIZING PLATE, AND LIQUID CRYSTAL DISPLAY DEVICE USING THE POLARIZING PLATE**

(57) The present invention provides a polarizer which can be obtained by an easy process without going through a complex process, a method for producing the same, and a liquid crystal display device that exhibits high brightness using the same. A polarizer containing, a substrate having a parallel linear pattern provided with convex portions having widths of w = 20 to 380 nm with pitches of p = 50 to 400 nm, and a metal layer formed on a surface side having the linear pattern of the substrate.

Fig.4

EP 1 840 603 A1

**Description**

TECHNICAL FIELD

The present invention relates to a polarizer used for various display devices and the like. More particularly, the present invention relates to a polarizer generally called as a reflective type in which one of the polarization components orthogonal to each other is transmitted and the other is reflected, a method for producing the same, and a liquid crystal display device using the same.

BACKGROUND ART

A liquid crystal cell integrated in a liquid crystal display device is composed of a liquid crystal layer and two sheets of polarizer disposed to sandwich the liquid crystal layer. The polarizer is a sheet making use of absorption anisotropy obtained by adsorbing iodine to a polymer sheet followed by being oriented by stretching, and exhibits polarization properties by absorbing, out of incident lights to the polarizer, a light component parallel to an absorption axis and transmitting a light component orthogonal to the above component. In such an absorbing polarizer, the transmittance does not exceed 50% theoretically when a non-polarized light such as natural light enters. Therefore, in the requirement for power consumption reduction in a liquid crystal display device, it is considered to be effective for enhancement of brightness to utilize the component to be absorbed.

Accordingly, it is proposed to dispose a polarization splitting sheet that reflects the polarization component to be absorbed at a polarizer that constitutes a liquid crystal cell, or a so-called reflective type polarizer, in a position that is nearer to a light source than the liquid crystal cell.

Examples of a reflective type polarizer include multilayer laminated type, circular polarization splitting type, wire grid type, and so forth.

A multilayer laminated type is composed of a large number of an isotropic refractive index layers and anisotropic refractive index layers laminated alternately. This type of polarizer is designed not to cause refractive index difference among the respective layers in a certain direction in a sheet plane and to increase the refractive index difference among the respective layers in a direction orthogonal thereto, so that one of the polarization components is transmitted and the polarization component orthogonal thereto is reflected, and thereby the polarizer functions as a reflective type polarizer (Patent Document 1).

A circular polarization splitting type is a polarizer making use of circular polarization dichroism exhibited by a cholesteric liquid crystal layer. In a cholesteric liquid crystal layer, liquid crystal molecules align in a spiral in a film thickness direction, with which dextral or sinistral circular polarization can be selectively reflected according to a helical direction, and the combination of the cholesteric liquid crystal layer and a quarter-wavelength ($\lambda$/4) plate functions as a reflective type polarizer (Patent Document 2).

A wire grid type is a polarizer that has a structure of thin metal lines disposed in parallel. This type of polarizer transmits polarized light oscillating perpendicularly to a metal line and reflects polarized light oscillating in parallel, and thereby functions as a reflective type polarizer (Patent Document 3).

Patent Document 1: Published Japanese Translation No. 2003-511729 of the PCT Application
Patent Document 2: Japanese Unexamined Patent Publication (Kokai) No. 2002-90533
Patent Document 3: Japanese Unexamined Patent Publication (Kokai) No. 2001-74935

DISCLOSURE OF THE INVENTION

Problems to be Solved by the Invention

However, in the case of a multilayer laminated type, it is necessary to laminate a plurality of sheets whose lamination ratio and thickness are adjusted in accordance with the wavelength in order to exhibit polarization properties in a broad band. In addition, since an optical path length varies according to an incident angle of light, the polarization properties depend on the angle.

In case of a circular polarization splitting type, it is difficult to form a cholesteric liquid crystal layer uniformly in a plane, and it is necessary to laminate a plurality of layers having a different helical pitch in order to exhibit polarization properties in a broad band.

By contrast, in case of a wire grid type, a complicated shape is not necessary as in the above two examples, and intended polarization properties are obtained by forming a metal line in a constant pitch. However, it is required to miniaturize a metal line to the degree of a wavelength to be applied. As a specific method, Patent Document 3 discloses a method for exhibiting a performance similar to that of a metal line by stretching a metal film to form cracks therein or by orienting anisotropically shaped metal particles without using a complicated method such as a process for producing a semiconductor. However, the former has difficulty in forming cracks uniformly as designed, and the latter has difficulty in controlling orientation of particles. As a result, an easy method for forming a metal pattern as it is designed has been required.

The present invention provides a polarizer by which the problems of conventional arts are conquered and which shows performance sufficient for a polarizer having a simple shape and is obtained by an easy process, a method of producing the same, and furthermore, a liquid crystal display device that exerts a high brightness enhancing effect using the same.

Means for Solving the Problems

(1) A polarizer comprising a substrate that has a parallel linear pattern composed of concave portions and convex portions and a metal layer formed on a surface side having the linear pattern of the substrate, wherein the convex portions are formed with widths of w = 20 to 380 nm and pitches of p = 50 to 400 nm.
(2) The polarizer according to (1), wherein a height h of the convex portion is from 10 to 400 nm.
(3) The polarizer according to (1) or (2), wherein the ratio (h/w) of the height h to the width w of the convex portion is from 0.5 to 5.
(4) The polarizer according to any one of (1) to (3), wherein a thickness of the metal layer is from 10 to 200 nm.
(5) The polarizer according to any one of (1) to (4), wherein a thickness of the metal layer formed on the concave portion of the linear pattern does not exceed the height h of the convex portion.
(6) The polarizer according to any one of (1) to (5), wherein at least a surface layer of the substrate containing the linear pattern is composed of any of thermoplastic resin, photocurable resin or thermosetting resin, or a resin composition containing a mixture thereof.
(7) The polarizer according to any of one (1) to (6), wherein the substrate is a multilayer structure which at least comprises a first layer containing the linear pattern and a second layer serving as a supporting material.
(8) The polarizer according to (7), wherein the second layer is a uniaxially or biaxially stretched polyester polymer sheet.
(9) A method for producing the polarizer according to (1) to (8), comprising the following step (i) or (ii):

(i) a step of forming a linear pattern on a substrate surface, and then forming a metal layer on the surface side having the linear pattern of the substrate,
(ii) a step of forming a metal layer on a substrate surface, then forming a linear pattern on the substrate, and thereby providing the metal layer on the linear pattern.

(10) The method for producing polarizer according to (9), wherein the linear pattern is formed by means of a mold transfer method.
(11) A liquid crystal display device, comprising at least a flat light source unit, a polarizer (A) according to (1) to (8), and a liquid crystal cell that are disposed in this order, wherein the liquid crystal cell has a liquid crystal layer and polarizers (B), (C) disposed so that the polarizers (B), (C) sandwich the liquid crystal layer, and a direction of a polarized axis of a polarized light transmitted through the polarizer (B), constituting the liquid crystal cell and disposed on the flat light source unit side, and a direction of a polarized axis of polarized light transmitted through the polarizer (A) are conformed.
(12) The liquid crystal display device according to (11), wherein the polarizer (A) is disposed so that the metal layer faces the liquid crystal cell.

Effects of the Invention

According to the present invention, a polarizer is fabricated in an easy process without going through a complicated process, and display with high brightness can be obtained by integrating the fabricated polarizer into a liquid crystal display device or the like.

BRIEF DESCRIPTION OF DRAWINGS

Fig. 1 is a schematic view showing a shape of a substrate constituting a polarizer of the present invention.

Fig. 2 is a schematic view showing a cross sectional shape of a preferable substrate constituting a polarizer of the present invention.

Fig. 3 is a schematic view showing a shape of a preferable polarizer (an aspect where a metal layer is formed on part of a substrate surface) of the present invention.

Fig. 4 is a schematic view showing a cross sectional shape of a preferable polarizer (an aspect where a metal layer is formed on the entire substrate surface) of the present invention.

Fig. 5 is a schematic view showing a structure of a liquid crystal display device (side light type) comprising a polarizer of the present invention installed therein.

Fig. 6 is a schematic view showing a structure of a liquid crystal display device (direct light type) comprising a polarizer of the present invention incorporated therein.

Brief Description of the Reference Numerals

| 1: | Convex portion |
|---|---|
| 2: | Metal layer |
| 3: | Polarizer of the present invention |
| 4: | Light source |
| 5: | Liquid crystal cell |
| 6: | Fluorescent tube |
| 7: | Reflective sheet |
| 8: | Light guide plate |
| 9: | Light diffusion sheet |
| 10: | Prism sheet |
| 11: | Diffusion plate |
| 12: | Housing |
| 13: | Concave portion of linear pattern |
| 100: | Substrate |

BEST MODE FOR CARRYING OUT THE INVENTION

A polarizer of the present invention comprises a substrate which has a linear pattern composed of concaves and convexes that are formed in a cycle on the surface and a metal layer formed on the side of the linear pattern. With such a structure, optical anisotropy can be exhibited, which is derived from a structural anisotropy in a longitudinal direction of the linear pattern and a direction perpendicular thereto. That is, a polarization component parallel to the longitudinal direction of the linear pattern is reflected, while a polarization component perpendicular thereto is transmitted. Furthermore, by making a pitch of the linear pattern shorter than a wavelength range of light to be applied, an optically-anisotropic structure that is uniform in the wavelength range is formed and functions as a polarizer.

In a polarizer of the present invention, a convex portion of the concaves and convexes forming the linear pattern is formed with pitches of p = 50 to 400 nm and widths of w = 20 to 380 nm. A metal layer is formed on a substrate having the linear pattern of these dimensions, and this makes it possible to obtain a polarizer which exhibits polarization properties in visible light region, that is, in a wavelength range of approximately from 400 to 800 nm.

It is not preferable that the pitch p exceeds 400 nm because a polarization degree decreases in a short wavelength region of visible light. It is not preferable that the pitch p is less than 50 nm because it becomes difficult not only to form a linear pattern on a substrate surface, but also to form a metal layer along the linear pattern. More preferably, the pitch p is 100 to 300 nm, and most preferably 100 to 250 nm.

It is not preferable that a width w is narrower than 20 nm because a linear pattern is apt to collapse. On the other hand, it is not preferable that a width w is wider than 380 nm because it becomes difficult to form a metal layer into a shape that reflects a linear pattern in view of a range of a pitch p. More preferably, the width w is 20 to 150 nm, and most preferably 20 to 100 nm.

Although it is preferable that a pitch p and a width w are constant in order to retain a uniformity of polarization properties in a plane, it can be accepted that various pitches and widths are mixed within the above ranges. Moreover, when a polarizer is fabricated in this shape, polarization properties are exhibited not only in a visible light region, but also in a longer wavelength region such as a near-infrared ray region and an infrared ray region, and thus the polarizer can be used as that for near-infrared rays and infrared rays.

It is preferable that a linear pattern and a metal layer which is formed on the side of the pattern are formed on not only one side of a substrate, but also both sides thereof. When they are formed on both sides of a substrate, linear patterns on both sides are preferably formed to be in parallel in a longitudinal direction. Furthermore, one side may have only a linear pattern without a metal layer.

In a polarizer of the present invention, the polarization properties may depend on a light incident angle in some cases in accordance with a height h of a convex portion constituting the linear pattern. When a polarizer of the present invention is used for a purpose that requires wide view angle, a height h of a convex portion is preferably from 10 to 400 nm. When a height h exceeds 400 nm, a polarization degree may occasionally vary according to a light incident angle. It is preferable to adjust a height h to 400 nm or less in order to obtain uniform polarization properties that have no dependency on a light incident angle. On the other hand, it is not preferable that a height h is less than 10 nm because sufficient optical anisotropy is not occasionally expected even when a metal layer is formed therealong. More preferably, the height h is from 20 to 300 nm, and most preferably from 30 to 300 nm. When a polarizer of the present invention is used in a narrow view angle range, for example, in case of an optical element using a normal direction only or a display device using a frontal direction only, it is not necessary to consider a light incident angle and therefore a height h may exceed 400 nm.

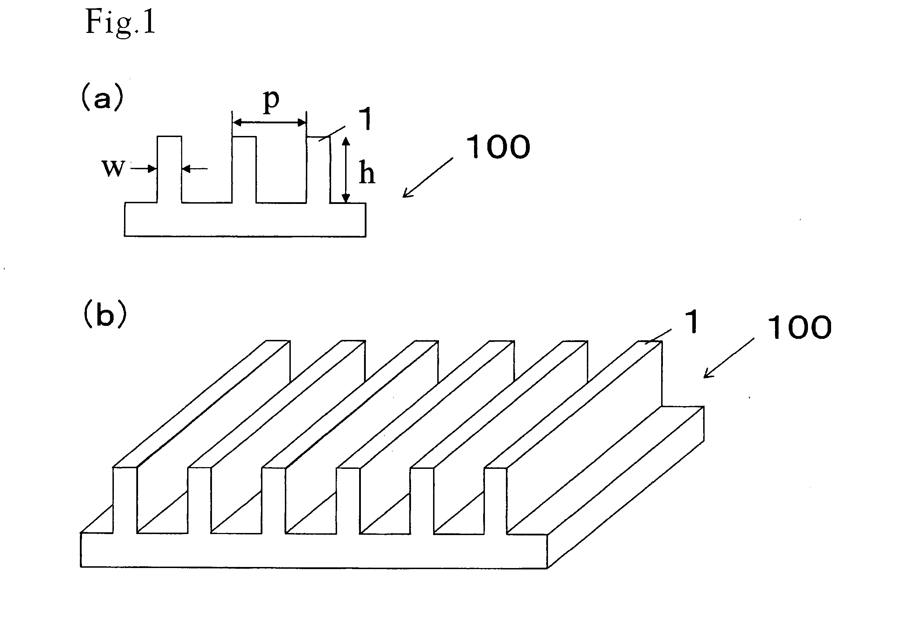

Fig. 1 shows a shape example of a substrate constituting a polarizer of the present invention on which a linear pattern is formed. Fig. 1(a) is a cross sectional view showing a substrate 100 having a linear pattern on one surface thereof, which includes convex portions 1 with a rectangular cross section. A pitch p, width w and height h are shown respectively in the figure. In the present invention, the width w denotes a length in a direction along which the concaves and the convexes are repeated, on a plane parallel to a substrate surface in a height of one half the height h of a convex portion, that is, in a height of h/2 from the substrate surface (bottom of a concave portion). Fig. 1(b) is a perspective view showing a substrate 100 having a parallel linear pattern composed of convex portions 1 formed in a cycle.

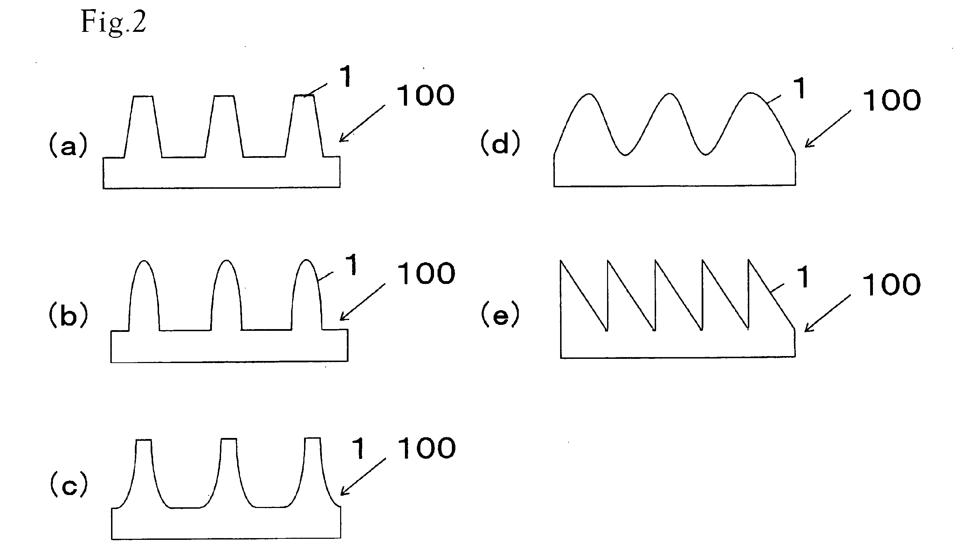

Fig. 1(a) and Fig. 2(a) to Fig. 2(e) show examples of preferable cross sectional shapes of a substrate constituting a polarizer of the present invention. Although a cross sectional shape of a convex portion is exemplified by rectangle (Fig. 1(a)), trapezoid (Fig. 2(a)), trapezoid with curved edges and side surfaces (Fig. 2(b), Fig. 2(c)), wave shape (Fig. 2(d)) and triangle (Fig. 2(e)), it is not limited thereto and any pattern can be used preferably as long as a linear pattern is formed in a plane. In addition, between adjacent convex portions, flat portions may be formed as shown in Fig. 1(a) and Fig. 2(a) to Fig. 2(c), or flat portions may not be formed as shown in Fig. 2(d) and Fig. 2(e). Among them, those with a rectangular cross section, a trapezoidal convex portion or a trapezoidal convex portion having curved edges and curved side surfaces, and with adjacent convex portions that are not connected at the bottoms of their own (for example, Fig. 1(a) and Fig. 2(a) to Fig. 2(c)) are preferable because of exhibition of high optical anisotropy after forming the metal layer.

The linear pattern is composed of the lines as shown in Fig. 1(b), that is, convex portions 1 to be formed in parallel. However, the lines are not necessarily strictly in parallel as long as they are substantially in parallel. And, it is preferable that each line is a straight line as it is the easiest to exhibit optical anisotropy in a plane. However, the line can be a curved line or polygonal line as long as the adjacent lines do not contact each other. Likewise, a continuous straight line is preferable for making it easier to exhibit optical anisotropy. However, the line can be a dotted line as long as the length is at least longer than a wavelength to be applied.

In a polarizer of the present invention, a metal layer can be formed on a part of a substrate surface or formed on an entire surface of a substrate.

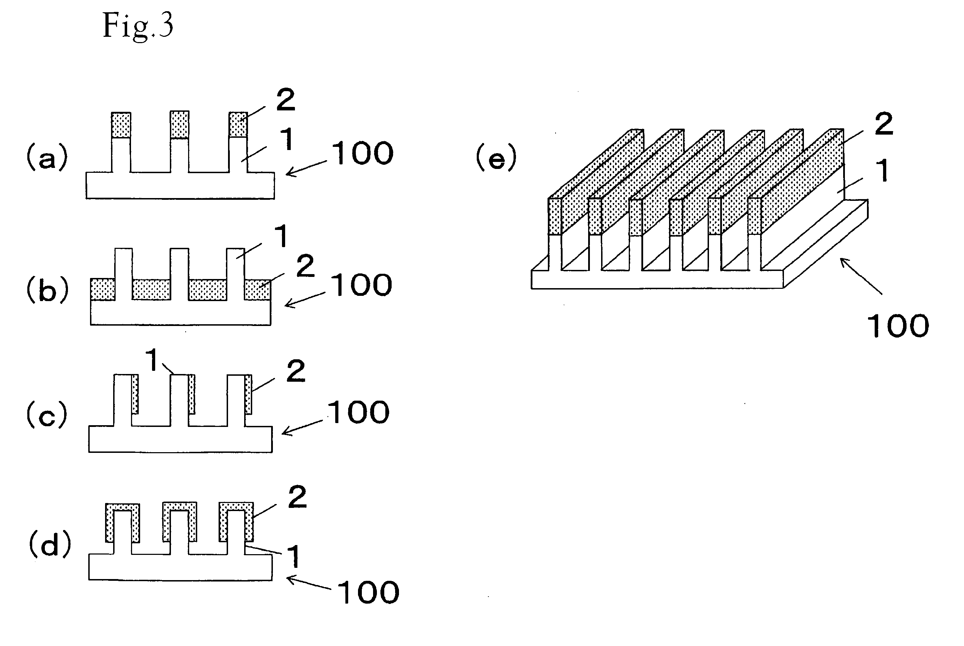

Fig. 3 shows examples of an aspect where a metal layer 2 is formed on a part of a linear pattern which has convex portions 1 with a rectangular cross section. Preferable examples include a case where a metal layer is formed on an apex of a convex portion of a linear pattern (Fig. 3(a)), a case where a metal layer is formed between adjacent convex portions, or in a concave portion (Fig. 3(b)), a case where a metal layer is formed on a side of a convex portion (Fig. 3(c)), a case where a metal layer is formed on a periphery of a convex portion (Fig. 3(d)) and a case where a metal layer is formed into a shape that above cases are combined. Fig. 3(e) is a perspective view showing a substrate having a cross sectional shape of Fig. 3(a), and shows an aspect that a metal layer is formed linearly along a linear pattern of a substrate 100.

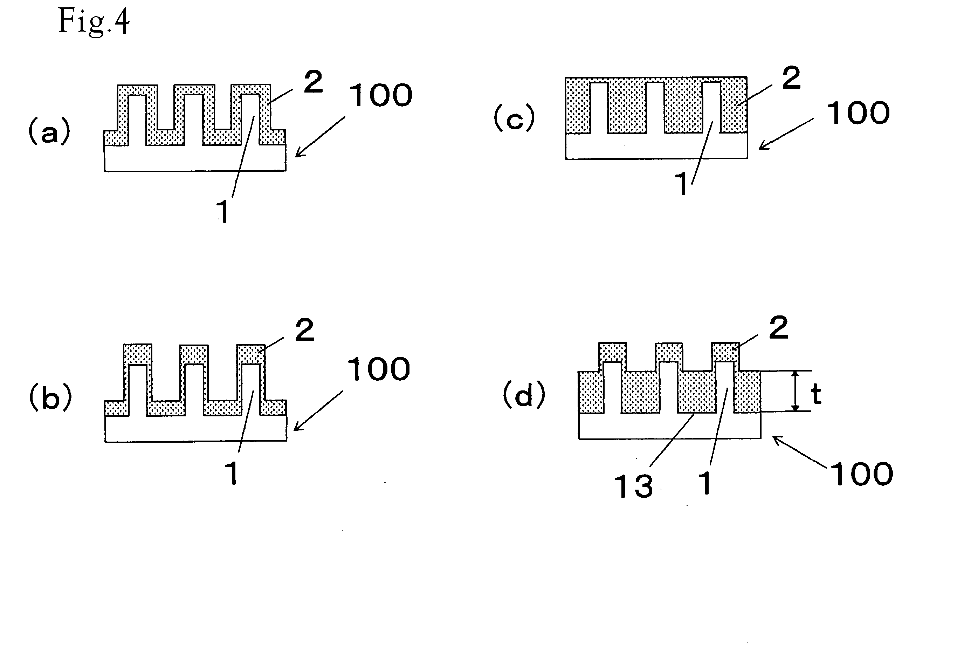

Fig. 4 shows examples of a case where a metal layer 2 is formed on an entire surface of a substrate 100. Examples include a case where a metal layer is formed on an entire surface in a uniform thickness along a shape of a convex portion of a linear pattern (Fig. 4(a)), a case where the thickness varies according to a position although it is formed along a shape of a convex portion (Fig. 4(b) to Fig. 4(d)), and a case where it is not formed along a shape of a convex portion but is formed to make a surface flat (Fig. 4(c)). Although all of them are used preferably, Fig. 4(a), Fig. 4(b) and Fig. 4(d) formed along a shape of a convex portion are more preferable because both transmittance and polarization degree can be increased.

Among the above aspects, in order to reduce a light quantity loss due to light absorption by a metal layer or the like so as to increase light use efficiency and to enhance transmittance much more, the cases where a metal layer is partially formed are preferable, and the cases where a metal layer is formed only on a periphery of a convex portion as shown in Fig. 3(a), Fig. 3(c) and Fig. 3(d) are more preferable.

In this case, with regard to the linear pattern of a substrate surface, it is preferable that the bottoms of adjacent convex portions are not connected as shown in Fig. 1(a) and Fig. 2(a), Fig. 2(b) and Fig. 2(c) because the metal layers can easily formed only in the vicinity of the convex portions. Even when a cross sectional shape is a wave pattern as shown in Fig. 2(d), a metal layer can be formed only in the vicinity of the convex portions, but the control of that is difficult because a portion where a metal layer is formed is likely to spread out due to the number of slants.

A thickness of the metal layer that constitutes the polarizer of the present invention is preferably from 10 to 200 nm. In this case, the thickness of the metal layer denotes a thickness measured heightwise along a convex portion of the substrate, and the metal layer should be formed at least on a part of the substrate in a thickness that satisfies the above range. It is preferable that the metal layer along the linear pattern of a substrate surface is formed in a thickness satisfying the above range because favorable polarization properties can be exhibited. The thickness of the metal layer is more preferably from 30 to 200 nm, and most preferably from 50 to 200 nm.

When the metal layer is formed on an entire surface of the substrate, it is preferable that the thickness (Fig. 4 (d), t) of the metal layer in a concave portion (Fig. 4(d), 13) is no more than a height h of a convex portion. In case where the thickness t of a metal layer in a concave portion 13 is thicker than a height h of a convex portion, the entire linear pattern is totally buried in a metal layer so as to function as an outright reflector, and therefore, it is more preferable that the thickness t of a metal layer is less than the height h of a convex portion.

On the other hand, when the metal layer is formed on a part of a substrate surface, it is preferable that a metal layer is formed only on a periphery of a convex portion (Fig. 3(a), Fig. 3(c) and Fig. 3(d)) as described above in order to obtain high light use efficiency and high transmittance. And in this case, the height of the sum of the thickness of a metal layer formed on a convex portion and the height h of a convex portion is preferably 400 nm or less. When the height of the sum exceeds 400 nm, polarization properties may be dependent on a light incident angle in some cases. Moreover, a total width TW of a metal layer and a convex portion is preferably 0.1p or more and 0.7p or less relative to a pitch p of a convex portion. It is not preferable that the ratio exceeds 0.7p because an enhanced effect of light use efficiency and transmittance is reduced. Incidentally, the total width TW and the pitch p necessary for calculating the ratio are measured on a same plane that is parallel to a substrate surface and in which a length of a metal layer in a direction where concaves and convexes are repeated is a maximum length.

The metal layer constituting the polarizer of the present invention is preferably "a layer composed of a highly reflective metal", and/or "a layer containing a highly reflective metal particle and/or a particle coated with a highly reflective metal". In addition, it may be a layer having a mixture thereof, or a multilayer structure comprising thereof.

In this case, "a layer composed of a highly reflective metal" denotes a metal layer composed of a single metal or an alloy, and a single layer or a multilayer structure of two or more layers consisting of different materials is preferably used. In case of a multilayer structure of two or more layers consisting of different materials, at least one layer is expected to be a layer comprising a highly reflective metal, and, for example, a low reflective material such as metal oxide or the like may be laminated. Particularly, in case of using a highly reflective metal that can be easily oxidized, it is preferable that a layer of the metal oxide is preliminarily formed on a surface of metal layer as a protecting layer so as to enhance temporal stability.

With regard to a highly reflective metal particle and a particle coated with a highly reflective metal contained in "a layer containing a highly reflective metal particle and/or a particle coated with a high reflective metal", a preferable particle size is from 1 to 100 nm, and more preferably from 1 to 50 nm. A particle size here denotes a median size $d_{50}$. A metal particle having a particle size of 100 nm or less is preferable because the particles have a low adhesive temperature and therefore are beginning to adhere even under a heat treatment at a low temperature such as at 200 to 300°C, and thus properties as a metal is exhibited and optical reflectiveness improves. Moreover, a particle size of 50 nm or less is more preferable because particles adhere under a heat treatment at a lower temperature in a short time. A shape of these particles is not particularly limited for a preferable use. Furthermore, a particle serving as an inner layer that is coated with a highly reflective metal is not particularly limited, and cross-linking resin particles such as an acrylic resin and inorganic particles such as silica and alumina are preferably used. It is preferable that these highly reflective metal particles and particles coated with a highly reflective metal form "a layer containing a highly reflective metal particle and/or a particle coated with a highly reflective metal" by the particle alone, combination of the particle and a dispersing agent, or combination of the particle, a dispersing agent and a binder such as any of thermoplastic resin, photocurable resin or thermosetting resin or a resin composition consisting primarily of these mixture.

A preferable highly reflective metal includes a metal selected from aluminum, chromium, silver, copper, nickel, platinum and gold, and an alloy consisting thereof as a primary constituent. In this case, a primary constituent denotes a case where a content of the metal exceeds 50% by weight in an alloy. Moreover, high reflectiveness denotes that reflectance is high in a wavelength range of light to be used, and it is preferable to use a metal with high reflectance because polarization degree of a polarizer can be enhanced. With regard to a metal with high reflectance, a metal that has a region in which the reflectance is 90% or more in a wavelength range to be used, or a metal that exhibits reflectance of 50% or more across the entire region is preferred. Among the above described metals, aluminum, chromium and silver are preferable because of high reflectance thereof across the entire visible light region.

With regard to a linear pattern on a substrate surface constituting a polarizer of the present invention, a ratio (h/w) of a height h to a width w of a convex portion is preferably in a range of from 0.5 to 5. When the ratio h/w is less than 0.5, structural anisotropy may not be fully exhibited even if a metal layer is formed, and thus sufficient polarization properties may not be occasionally obtained. In addition, when the ratio h/w exceeds 5, a linear pattern meanders to collapse, and thus unevenness may appear in polarization properties in a plane. More preferable ratio h/w of a height h to a width w is from 1 to 5, and most preferably from 2 to 5.

Moreover, with regard to a linear pattern on a substrate surface constituting a polarizer of the present invention, a ratio h/(p-w) of a height h of a convex portion to a width between convex portions, or a width of a concave portion (p-w), is preferably in a range of from 1 to 5. It is preferable that a linear pattern having a ratio h/(p-w) satisfying the range is used because a position where a metal layer is formed is easily controlled and particularly a metal layer formation only on a periphery of a convex portion becomes easy. More preferable ratio h/(p-w) is from 1.2 to 5, and most preferably from 1.4 to 5.

Moreover, with regard to a linear pattern on a substrate surface constituting a polarizer of the present invention, a ratio (w/p)-of a width w to a pitch p of a convex portion is preferably in a range of 0.1 to 0.5. By forming a metal layer on a linear pattern having a ratio w/p satisfying the range, a polarizer having both high polarization degree and high transmittance is formed, so as to be preferable. More preferable ratio w/p is from 0.1 to 0.4, and most preferably from 0.1 to 0.35.

A polarizer of the present invention is specially characterized by a linear pattern formed on a substrate surface. Hereinafter, effects resulting from an existence of the linear pattern will be described.

A first feature is to exhibit double refractivity by formation of a linear pattern. When a linear pattern having concavity and convexity in a cycle with a pitch less than a wavelength of incident light is formed, refractive anisotropy, or double refraction, is exhibited in a longitudinal direction of the pattern and a direction orthogonal thereto. In this case, by properly adjusting a width, pitch, height and refractive index of a material itself in a convex portion constituting the pattern, it becomes possible to control double refractivity of a substrate.

Although a flat light source unit is incorporated into a liquid crystal display device capable of mounting a polarizer of the present invention, the light that exits from the flat light source unit is not always in a complete non-polarized state, but is polarized at times by an influence of a member that makes use of reflection and refraction in an interface such as a light guide plate and a prism sheet. Accordingly, even if a reflective type polarizer is disposed on the side of a liquid crystal cell to face the flat light source unit, when the polarized direction and a transmitting polarized axis of a reflective type polarizer do not conform, reflective components increase and light use efficiency is not enhanced as a result. Therefore, by having a substrate exhibit a double refractive property and entering incident light from the substrate side as in a polarizer of the present invention, polarized state biased by double refraction is eliminated and light use efficiency can be enhanced. For example, when a width, pitch and material of a convex portion constituting a pattern are identical, a height of a convex portion is increased so as to eliminate a polarized state much more. In order to take advantage of a double refractive property, a structure where a metal layer is formed only on a periphery of a convex portion of a linear pattern is preferable. Moreover, a case where an entire substrate has double refraction is similarly preferable as well as a case where a linear pattern has double refraction.

Furthermore, it is preferable to provide a substrate constituting a polarizer of the present invention with a function of a quarter-wavelength plate. In this case, when a light is entered from the substrate side, polarized light reflected by a polarizer is simultaneously converted into circular polarization. The circular polarization is brought back to a flat light source unit and a polarized state is partially eliminated, however, it comes back to the polarizer once again in a state of containing much circular polarization converted into reverse rotation by reflection. When the reversed circular polarization passes through a substrate, it is converted into linear polarized light and is transmitted through a polarizer, so as to enhance light use efficiency.

A second feature is easy metal patterning. Details will be described when the production method is explained, however, by forming a pattern on a substrate surface in advance, it becomes possible to form a metal layer easily in accordance with the pattern shape without going through complicated processes, namely a resist patterning and an etching treatment by applying a process for production of semiconductors or the like.

In addition, in a substrate constituting a polarizer of the present invention, it is preferable that at least a surface layer containing a linear pattern is composed of any of thermoplastic resin, photocurable resin or thermosetting resin or a resin composition containing a mixture thereof as a primary constituent. In this case, a primary constituent is defined when the content exceeds 50% by weight in the layer.

Examples of a thermoplastic resin include polyester-based resins such as polyethylene terephthalate, polyethylene-2,6-naphthalate, polypropylene terephthalate and polybutylene terephthalate; acrylic resins such as polymethyl methacrylate; polyolefin-based resins such as polyethylene, polypropylene, polymethylpentene and alicyclic polyolefin resins; polyamide-based resins; polycarbonate; polystyrene; polyether; polyester amide; polyether ester; polyvinyl chloride; polyvinyl alcohol; copolymers thereof; and mixtures thereof.

Examples of a photocurable resin include compounds having at least one radical polymerizability or cationic polymerizability in the molecule. A compound having radical polymerizability denotes a compound that is subjected to polymerization or crosslinking reaction upon irradiation of chemoradiation in the presence of a polymerization initiator which generates radical by active energy rays. Examples thereof include those containing at least one ethylene-based unsaturated bond in a structural unit, those containing a polyfunctional vinyl monomer in addition to a monofunctional vinyl monomer, and oligomers, polymers and mixtures thereof. The compound that has at least one kind of cationic polymerizability in the molecule is exemplified by one or more compounds selected from those having an oxirane ring, those having an oxetane ring and vinyl ether compounds.

Examples of a thermosetting resin include acrylic resins, epoxy resins, unsaturated polyester resins, phenol resins, urea/melamine resins, polyurethane resins and silicon resins, and the single resin or a mixture of two or more kind selected therefrom is used.

A polymerization initiator is mixed in a photocurable resin and a thermosetting resin. In case of a photocurable resin, it is preferable to use a photopolymerization initiator which generates radical or cationic species upon irradiation of active energy rays according to an exposure wavelength and a polymerization style, while in case of a thermosetting resin, it is preferable to use a heat polymerization initiator according to a process temperature.

A preferable resin is transparent and has no absorption peak at a particular wavelength across a wavelength range to be used, that is, in a visible light range of from 400 to 800 nm when it is used for a liquid crystal display device. Transparent denoted here indicates a state that a light beam substantially is not scattered, and a resin having a haze value of 30% or less is preferably used.

It is also preferable to add various components to the resin according to need. Examples of the additives include a surfactant, cross-linking agent, film formation aid, ultraviolet absorber, photostabilizer, thermostabilizer, plasticizer, viscosity modifier, oxidation inhibitor and electrification inhibitor.

It is also preferable that a substrate constituting a polarizer of the present invention is a multilayer structure comprising at least a first layer containing a surface linear pattern and a second layer serving as a supporting material. With the laminated structure, mechanical strength and heat resistance are secured by the second layer serving as a supporting material, while a modifiable material can be used for the first layer and thus a linear pattern is easily formed on a substrate surface, so as to be preferable. Incidentally, the second layer itself serving as a supporting material can be a single layer or a multilayer structure having a plurality of layers. In this case, a modifiable material used for a first layer denotes the above described thermoplastic resins, photocurable resins and thermosetting resins. As described hereinafter, it is preferable to employ a mold transfer method to form a linear pattern on a substrate surface in view of productivity, and, it is preferable that these resins for a first layer are used because a linear pattern is formed on a substrate surface by means of a mold transfer method.

With regard to a second layer serving as a supporting material, various materials can be used, which include inorganic substrates such as glass and metal; and polymer substrates constituted by polyester resins, acrylic resins such as polymethylmethacrylate, polyolefin resins such as alicyclic polyolefin and polycarbonate. When an inorganic substrate such as glass and metal is used a supporting material, flatness, mechanical strength and heat resistance excel, while when a polymer substrate constituted from resin such as a polyester resin is used, flexibility, weight saving and film thinness are attained. In addition, it is preferable for a second layer to use a material which is transparent, has no specific absorption peak across a wavelength range to be used and exhibits light diffusing. The use of a material exhibiting light diffusing as a second layer constitutes a preferable functional integration of a polarizer and a light diffuser. Manifestation of light diffusing can be, for example, attained by internal dispersion of particles. Furthermore, when a polarizer is used in a way where light is entered not from a substrate side, but from a metal layer, a material exhibiting a light absorption or light reflection property can be used as a second layer. In this case, the integrated material can be used as a polarized reflector that reflects specific polarization components. A thickness of a second layer is not particularly limited, but, in view of mechanical strength and film thinness, a preferable thickness is from 0.1 to 3 mm in case of an organic substrate, and from 50 $\mu$m to 3 mm in case of a polymer substrate.

Furthermore, as a second layer serving as a supporting material, a thermoplastic resin sheet containing a polyester resin as a primary constituent is preferable among other materials described above, and in order to enhance mechanical strength and heat resistance, a uniaxially or biaxially stretched polyester resin sheet is preferable. When a biaxially stretched polyester resin sheet is used, film thinness, flexibility and weight saving can be attained along with securing mechanical strength and heat resistance and the sheet is the most preferable supporting material. Particularly, impact resistance excels in a form of a thin film with compared to glass of an inorganic substrate. In addition, as stated above, stretching the sheet is preferable because double refractivity is exhibited and therefore a bias in a state of polarization of incident light is eliminated and thus brightness of a liquid crystal display device or the like can be enhanced. Examples of a preferable polyester resin used here include polyethylene terephthalate, polyethylene-2,6-naphthalate, and copolymers of the polyester resin as a base and other components. Furthermore, a resin composition comprising the polyester resin as a primary constituent and other compatible and/or non-compatible components is preferably used too.

It is preferable for a polarizer of the present invention to have an antireflection layer formed on a substrate surface where a metal layer is not formed, which prevents reflection of light resulting from a difference of refractive indexes on an air-substrate boundary. That is, it is preferable that an antireflection layer is formed to suppress unnecessary reflection at the interface. With a constitution thereof, light use efficiency can be enhanced furthermore. The antireflection layer can be formed by a material that has a property of preventing reflection to exhibit an antireflection function, or can be formed into a specific shape so as to exhibit an antireflection function.

Likewise, it is preferable to form a light diffusing layer on a substrate surface where a metal layer is not formed. As stated above, when a light diffusing property is provided to a substrate itself by dispersion of particles or the like into the substrate, isotropic light diffusing effect is mainly exhibited, while when a light diffusing layer is formed on a substrate surface, a surface shape is designed discretionarily and therefore a light diffusing property can be controlled easily.

A polarizer of the present invention stated above is produced through the following step (i) or (ii):

(i) a step of forming a linear pattern on a substrate surface, and then forming a metal layer on the surface side having the linear pattern of the substrate, and
(ii) a step of forming a metal layer on a substrate surface, then forming a linear pattern on the substrate, and thereby providing the metal layer on the linear pattern.

In this case, although photolithography or an etching method used in a semiconductor manufacturing process can be applied as a formation method of a linear pattern, modification by a mold transfer method is preferable from the perspective of productivity and cost performance because the photolithography or an etching method are complex,. Hereinafter, production method of (i) and (ii) will be described by way of examples.

In case of a method (i), a linear pattern is formed on a substrate surface by means of mold transfer using application of heat and pressure or irradiation of an electromagnetic wave before a metal layer is formed. In a method using application of heat and pressure, a substrate and a mold are subjected to heat and pressure in a pile followed by mold release, so that a mold shape is transferred onto a substrate surface. In doing so, it is preferable that at least a substrate surface is constituted by a thermoplastic resin or thermosetting resin. In addition, in a method using irradiation of an electromagnetic wave, a photocurable resin is directly filled in a mold, or the resin is filled in a mold by pressing a mold onto a substrate coated with the resin, and a substrate and a mold are subjected to irradiation of an electromagnetic wave in a pile to cure the resin, followed by mold release, so that a mold shape is transferred. It is preferable that at least a substrate surface is constituted of a resin that is cured by an electromagnetic wave such as ultraviolet rays, visible rays or electron beam.

A metal layer is formed on a substrate surface where a linear pattern is formed by the above method.

In a production method of a polarizer of the present invention, preferable methods for formation of a metal layer include a deposition, sputtering, plating and coating method. A deposition and sputtering method enable not only forming a uniform metal layer on an entire substrate surface, but also forming a metal layer only on a periphery of a convex portion of a linear pattern by controlling an angle of deposition or sputtering, so as to be effective means in controlling a position where a metal layer is formed. Control of an angle of deposition or sputtering denotes control of an angle of deposition or sputtering relative to a normal line direction, and, for example, it is preferable to conduct deposition or sputtering in a diagonal direction relative to a normal line and in a longitudinal direction of a linear pattern. As a plating method, an electroforming method which comprises forming a metal layer on a substrate by deposition or the like, followed by having the plate grow, and a nonelectrolytic plating method which comprises coating fine particles serving as a catalyst such as silver and palladium on a substrate, followed by having the plate grow, are exemplified. For example, when metal particles serving as a catalyst are filled in a concave portion of a linear pattern and then nonelectrolytic plating is conducted, a metal layer is formed only on a concave portion. A coating method is a method of forming a metal layer by spreading a coating agent containing metal particles on a substrate, and an entire or a partial formation is enabled by adjusting a thickness of a coating film. Among them, deposition method and sputtering method are more preferable formation methods since the position of a metal layer to be formed is easily controlled and, particularly, the methods are effective in partial formation of a metal layer.

In a method (ii), a metal layer is formed entirely or partially on a substantially flat substrate, and then a linear pattern is formed by means of mold transfer. This is a method that forms a linear pattern in a lump on a laminated material comprising a substrate and a metal layer, and the process is simplified with compared to the production method (i) in which the process takes two stages, so as to be a more preferable method. In this case, it is preferable that a substrate with a metal layer formed thereon and a mold are superimposed in conducting mold transfer and a linear pattern is formed by application of heat and pressure, and it is also preferable that a surface of the substrate is composed of a thermoplastic resin. That is, it is a method of forming a linear pattern on a metal layer as well, making use of thermoplasticity of a substrate. By cleaving a metal layer during mold transfer, a polarizer with a metal layer 2 partially formed thereon is formed as shown in Fig. 3. For example, the structures shown in Fig. 3(a) and Fig. 3(d) are formed when a metal layer is cleaved by a convex portion of a mold pressed in. In addition, a structure shown in Fig. 3(b) can be formed by pressing in a metal layer by a convex portion of a mold and cleaving the metal layer in a concave portion of the mold. Furthermore, it is possible to modify into a shape formed along the cross section of a mold as shown in Fig. 4(a), Fig. 4(b) and Fig. 4(d) without cleaving a metal layer.

A fabrication of a mold used in a production method of a polarizer of the present invention is not particularly limited. However, in light of a dimension of a polarizer of the present invention, it is preferable to fabricate it through such processes as patterning of a resist layer formed on a mold material using X-rays, electron beam, ultraviolet rays, ultraviolet laser or the like, followed by etching or the like. Furthermore, it is preferable to perform a surface treatment using a fluorine-based resin or the like on a surface of a mold for a purpose of enhancing mold releasability to a substrate.

A liquid crystal display device preferably mounted with such a polarizer described above is constituted of a light source and a liquid crystal cell in a broad sense. An above described polarizer of the present invention is disposed between a light source and a liquid crystal cell. Hereinafter, a polarizer of the present invention which is disposed in this position will be called a polarizer (A).

A liquid crystal cell is constituted of 2 sheets of polarizer (B), (C) and a liquid crystal layer or the like disposed between the 2 sheets of polarizer (B), (C). Polarizers (B), (C) used for a liquid crystal cell are those commonly called as an absorption-type, and polarization components in a direction perpendicular to a transmission axis are absorbed. Accordingly, light use efficiency is theoretically 50%. However, in the present invention, polarized light that is supposed to be absorbed there is reflected by a polarizer (A) disposed on a side nearer to a light source than a liquid crystal cell, and after a state of polarization is eliminated in a light source region, the light is brought back toward a liquid crystal cell once again, and thus light use efficiency improves and brightness is enhanced. That is, by disposing a polarizer (A) between a liquid crystal cell and a light source in conforming a direction of polarized axis of a polarizer (B) disposed on a side facing to the light source in the liquid crystal cell to a direction of a polarized axis of polarizer (A), a polarization composition supposed to be absorbed at a polarizer (B) can be reflected before light reaches to the polarizer (B), and thus light use efficiency improves and brightness is enhanced. In this case, conformity of a direction of a polarized axis denotes a state where a crossing angle made between a direction of a polarized axis of a polarizer (A) and that of a polarized axis of a polarizer (B) is 5° or less. It is preferable because, with this angle, sufficient effect is obtained, and it is more preferable that a crossing angle is 0° because brightness enhanced effect is exhibited the most with the angle thereof.

Preferable constitutional examples of a liquid crystal display device using a polarizer of the present invention are shown.

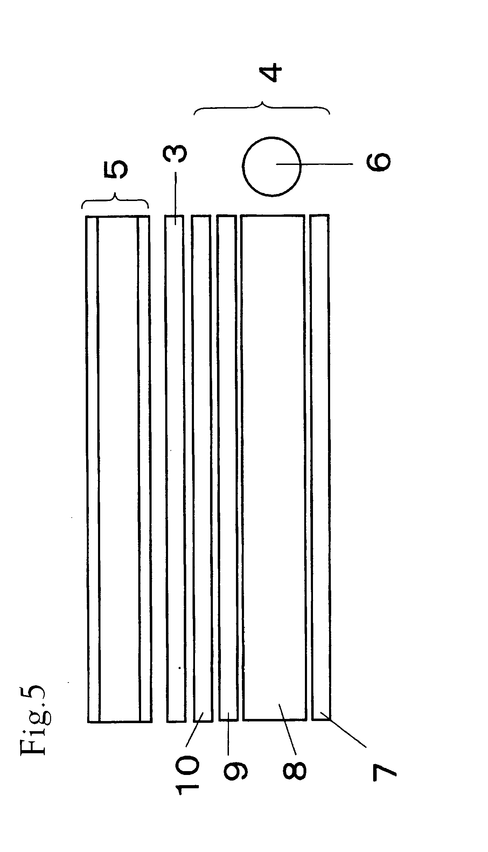

Fig. 5 is an example showing a liquid crystal display device using a side light-type flat light source unit as a light source 4, in which a polarizer 3 of the present invention and a liquid crystal cell 5 are disposed in laminated structure in this order on the upper side of a light source 4. This type of light source is commonly constituted by a light guide plate 8 that is commonly composed of a transparent acrylic plate or the like, a linear fluorescent lamp 6 disposed on the side of the light guide plate 8, a reflective sheet 7 disposed under the light guide plate 8, a light diffusing sheet 9 disposed above the light guide plate 8 and a prism sheet 10 disposed above the light diffusion sheet 9. The light guide plate, fluorescent lamp, reflective sheet, light diffusion sheet and prism sheet can employ various members and constitutions, respectively. The light guide plate, for example, can employ those with dotted planes, prismatic planes or the like to be processed on both surfaces. The fluorescent lamp is not limited to a linear type in its shape, and the number of tubes is not limited either. With regard to the light diffusion sheet and prism sheet, either can be selected, or plural sheets can be used, respectively.

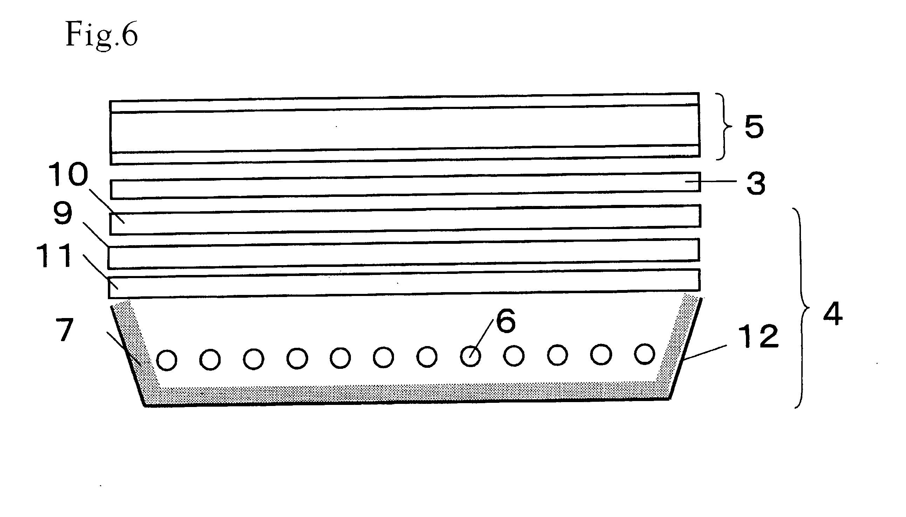

Fig. 6 is an example showing a liquid crystal display device using a direct-type flat light source unit as a light source 4. In this type of a light source, a plurality of linear fluorescent lamps 6 are laid in line inside a housing 12 where a reflective sheet 7 is carpeted, and a diffusion plate 11 is disposed on the fluorescent lamps 6 and, above it, a light diffusion sheet 9 and a prism sheet 10 are disposed in this order. In case of a direct-type flat light source unit as well, respective constitutional members can employ various members and constitutions. For example, a shape of a fluorescent lamp is not limited to a linear shape, and likewise, with regard to a diffusion plate, light diffusion sheet and prism sheet, various members and constitutions can be employed. Above the light source 4, a polarizer 3 of the present invention and a liquid crystal cell 5 are disposed in this order.

In such a liquid crystal display device as those described above, it is preferable that a polarizer (A) of the present invention is disposed such that a metal layer faces to a liquid crystal cell. With the disposition thereof, a substrate exhibiting double refractivity is not laid between a metal layer and a polarizer (B) that constitutes a liquid crystal cell, and thus reduction of polarization properties is suppressed.

As described above, by integrating a polarizer of the present invention into a liquid crystal display device, it becomes possible to enhance brightness of a liquid crystal display device.

EXAMPLES

Measurement methods and evaluation methods of the respective Examples and Comparative Examples will now be described.

(Measurement/Evaluation Methods)

A. Observation of Cross Section

Polarizers fabricated in the respective Examples and Comparative Examples were cut out, and the cross sections perpendicular to the longitudinal direction of a linear pattern were observed by using a scanning electron microscope S-2100A (manufactured by Hitachi Ltd.) in the magnification of 50,000 times, and then the dimensions (pitch p (nm), width w (nm), height h (nm)) of a convex portion constituting a linear pattern, thickness (nm) of a metal layer and total width TW (nm) of a metal layer and a convex portion were measured. Any 5 points on convex or concave portions out of regions where a metal layer was formed were selected, and the thickness in a normal line direction of a substrate was measured and the mean value was calculated. The total width TW of a metal layer and a convex portion was measured when a metal layer is formed only on a periphery of a convex portion, and the mean values at any 5 points were calculated.

B. Transmittance, Polarization Degree

With regard to polarizers fabricated in the respective Examples and Comparative Examples, total transmittance was measured in a wavelength range of from 400 to 800 nm using a spectrometer U-3410 (manufactured by Hitachi Ltd.), and the mean value of the transmittance measured at every 5 nm starting from 400 nm was calculated. Transmittance of 20% or more was rated A, 10 % or more and less than 20% was rated B, and less than 10% was rated C. The evaluation result of A and B is rated good.
Furthermore, comparing the transmittance at 450 nm, 550 nm, and 650 nm, the wavelength dependence was evaluated for the case of A as the difference of the maximum value and the minimum value is within 20%, B (20% or more and less than 30%), and C (more than 30%). The evaluation result of A and B is rated good.
Polarization degree was obtained by superimposing a glass polarizing filter (manufactured by Edmund Optics Japan Inc.) on a polarizer fabricated in each Example and comparative Example, disposing it in the spectrometer such that the glass polarizing filter is disposed on the light source side (light incident side), measuring a maximum transmittance Imax and a minimum transmittance Imin at 550 nm and applying those values to the following equation. Polymerization Degree = (Imax - Imin)/(Imax + Imin)
A case where the polarization degree exceeds 0.9 was rated A, a case where it exceeds 0.8 and it is 0.9 or less was rated B, and a case where it is 0.8 or less was rated C. The evaluation result of A and B is rated good.
In either measurement of transmittance and polarization degree, each polarizer was disposed such that a surface without a metal layer was laid on a light source side (light incident side), and an incident angle of light was adjusted to 0°.

C. Brightness

A tube of fluorescent lamp was disposed on the side of an acrylic light guide plate of 1 inch square, a reflective sheet "Lumirror" E60L (manufactured by Toray Industries Inc.) was disposed under the light guide plate, and a light diffusion sheet "Opalus" BS-04 (manufactured by Keiwa) and a prism sheet BEFII (manufactured by Sumitomo 3M Ltd.) were disposed above the light guide plate, so as to compose a side light-type flat light source unit. Then, a polarizer in the respective Examples and Comparative Examples was superimposed on the prism sheet, and, furthermore, an absorbing polarizer (LN-1825T manufactured by Polatechno Co. Ltd.) was placed thereon such that the directions of a tranmission axis of the polarizer and that of absorbing polarizer conform, and then the flat light source unit was booted up at 12 V. Brightness L1 was measured by using a color brightness photometer BM-7/FAST (manufactured by Topcon Corp.). Then a polarizer of the respective Examples and Comparative Examples was taken out and brightness L0 was measured in the same way. Using brightness L0, a value when a polarizer of the respective Examples and Comparative Examples was not inserted, and brightness L1, a value when a polarizer of the respective Examples and Comparative Examples was inserted, a brightness enhanced rate was calculated using the following formula. A case where a brightness enhanced rate was 25% or more was rated S, a case of 20% or more was rated A, a case of 10% or more and less than 20% was rated B, and a case of less than 10% was rated C. The evaluation result of S, A and B are rated good.

$$\texttt{Brightness Enhanced Rate = 100 × (L1 - L0)/L0}$$

The present invention will now be described by way of Examples. However, the present invention is not necessarily limited thereto.

(Example 1)

A substrate using an alicyclic polyolefin resin "Apel" APL8008T (manufactured by Mitsui Chemicals Inc.) having thickness of 400 μm and the following mold 1 were superimposed and placed in a vacuum chamber. After reaching to a vacuum degree of 50 Pa or less, the substrate and a mold were preheated at 110°C for 5 minutes, pressed at a press temperature of 110°C under a press pressure of 15 MPa for 5 minutes and cooled down to 70°C, and the pressure was released so as to release the substrate from the mold.

" mold 1"

Material: Nickel, Size: 30 mm square
Pitch: 400 nm, Width of Convex Portion: 200 nm,
Height of Convex Portion: 200 nm,
Shape of Cross Section in Concave Portion: Rectangular

Observing a shape of the substrate released from the mold, it was learned that a linear pattern having a cross section of just about a reversal shape of the mold was obtained as follows.

"Linear Pattern of Substrate"

Pitch p: 400 nm, Width w: 190 nm, Height h: 190 nm

Then, aluminum was vacuum deposited over an entire surface with concavity and convexity to be formed thereon from a normal line direction, and a metal layer shown in Fig. 4(b) and Fig. 4(d) was formed. Incidentally, thickness of the metal layer was 80 nm in both an apex of the convex portion and a bottom of the concave portion.

The evaluation results of transmittance, wavelength dependency, polarization degree and brightness enhanced rate are shown in Table 1. A polarizer having polarization properties and exhibiting a brightness enhanced effect is obtained.

(Example 2)

A substrate using polymethyl methacrylate having thickness of 300 μm and the above mold 1 were superimposed and placed in a vacuum chamber. After reaching to a vacuum degree of 50 Pa or less, the substrate and a mold were preheated at 140°C for 5 minutes, pressed at a press temperature of 140°C under a press pressure of 15 MPa for 5 minutes and cooled down to 90°C, and the pressure was released so as to release the substrate from the mold.

Observing a shape of the substrate released from the mold, it was learned that a linear pattern having a cross section of just about a reversal shape of the mold was obtained as follows.

"Pattern of Substrate"

Pitch p: 400 nm, Width w: 190 nm, Height h: 190 nm

Then, aluminum was vacuum deposited over an entire surface with concavity and convexity to be formed thereon from a normal line direction, and a metal layer shown in Fig. 4(b) and Fig. 4(d) was formed. Incidentally, thickness of the metal layer was 210 nm in both an apex of the convex portion and a bottom of the concave portion.

The evaluation results are shown in Table 1.

(Example 3)

A substrate using a cyclohexane dimethanol copolymer polyester resin having a thickness of 300 μm (DN071 manufactured by Eastman Chemicals Co.) and the following mold 2 were superimposed and placed in a vacuum chamber. After vacuuming the chamber to be a vacuum degree of 50 Pa or less, the substrate and the mold were preheated at 110°C for 5 minutes, pressed at a press temperature of 110°C under a press pressure of 10 MPa for 5 minutes and cooled down to 70°C, and the pressure was released so as to release the substrate from the mold.

" mold 2"

Material: Nickel, Size: 30 mm square
Pitch: 200 nm, Width of Convex Portion: 100 nm,
Height of Convex Portion: 150 nm,
Shape of Cross Section in Concave Portion: Rectangular

Observing a shape of the substrate released from the mold, it was learned that a linear pattern having a cross section of just about a reversal shape of the mold was obtained as follows.

"Pattern of Substrate"

Pitch p: 200 nm, Width w: 90 nm, Height h: 135 nm

Then, aluminum was vacuum deposited over an entire surface with concavity and convexity to be formed thereon from a normal line direction, and a metal layer shown in Fig. 4(b) and Fig. 4(d) was formed. Incidentally, thickness of the metal layer was 40 nm in both an apex of the convex portion and a bottom of the concave portion.

The evaluation results are shown in Table 1. A polarizer having a high brightness enhanced effect and improved wavelength dependency was obtained.

(Example 4)

A polarizer was fabricated in the same manner as in Example 3 except for conducting aluminum deposition from a direction which is perpendicular to a longitudinal direction of a linear pattern and diagonal at 30° from a substrate surface. A metal layer was formed only on an apex and upper part of one side of a convex portion, and the thickness of the metal layer was 30 nm at the apex of the convex portion and the total width TW was 110 nm.

The evaluation results are shown in Table 1. A polarizer exhibiting a high brightness enhanced effect was obtained.

(Example 5)

A multilayer substrate comprising a glass substrate 1737 (manufactured by Corning Ltd.) 0.6 mm in thickness and polymethyl methacrylate (PMMA) 5 $\mu$m in thickness formed thereon was used as a substrate. A PMMA layer of the substrate and the mold 2 were superimposed and placed in a vacuum chamber. After reaching to a vacuum degree of 50 Pa or less, the substrate and a mold were preheated at 120°C for 5 minutes, pressed at a press temperature of 120°C under a press pressure of 10 MPa for 5 minutes and cooled down to 70°C, and the pressure was released so as to release the substrate from the mold.

Observing a shape of the substrate released from the mold, it was learned that a linear pattern having a cross section of just about a reversal shape of the mold was obtained as follows.

"Pattern of Substrate"

Pitch p: 200 nm, Width w: 90 nm, Height h: 130 nm

Then aluminum deposition was conducted from a direction which is perpendicular to a longitudinal direction of a linear pattern and diagonal at 30° from a substrate surface. As a result, a metal layer was formed only on an apex and upper part of one side of a convex portion, and the thickness thereof was 50 nm at the apex of the convex portion and the total width TW was 115 nm.

The evaluation results are shown in Table 1. A polarizer exhibiting a high brightness enhanced effect was obtained.

(Example 6)

A cyclohexane dimethanol copolymer polyester resin 500 $\mu$m in thickness (DN071 manufactured by Eastman Chemicals Co.) was used as a substrate, and aluminum was uniformly deposited thereon in a thickness of 50 nm so as to form a metal layer before conducting mold transfer. Then the mold 2 was superimposed on a surface of the metal layer and placed in a vacuum chamber. After reaching to a vacuum degree of 50 Pa or less, the substrate and the mold were preheated at 120°C for 5 minutes, pressed at a press temperature of 120°C under a press pressure of 15 MPa for 5 minutes and cooled down to 70°C, and the pressure was released so as to release the substrate from the mold.

Observing a shape of the substrate released from the mold, it was learned that a linear pattern which almost reflected a shape of the mold as shown in Fig. 4(b) and Fig. 4(d) was obtained, although the edges were somewhat rounded with compared to those of the mold. Incidentally, the thickness for the metal layer was 50 nm at both an apex of a convex portion and a bottom of a concave portion.

"Pattern of Substrate"

Pitch p: 200 nm, Width w: 100 nm, Height h: 100 nm

The evaluation results are shown in Table 1.

(Example 7)

A biaxially stretched polyethylene terephthalate sheet "Lumirror" U10 (manufactured by Toray Industries Inc.) 188 $\mu$m in thickness, on which the following curing resin composition was coated in a thickness of 5 $\mu$m, was used as a substrate, and the substrate and the following mold 3 were superimposed. It was exposed to an ultrahigh pressure mercury lamp at 600 mJ/cm$^2$ from the substrate side, and the substrate and the mold were released.

(Photo-curable resin composition)

Adekaoptomer KRM-2199 (manufactured by Asahi Denka Kogyo Co. Ltd.) 10 parts by weight
Aronoxetane OXT-221 (manufactured by Toagosei Co. Ltd.) 1 part by weight
Adekaoptomer SP170 (manufactured by Asahi Denka Kogyo Co. Ltd.) 0.25 parts by weight

"mold 3"

Material: Nickel, Size: 30 mm square
Pitch: 150 nm, Width of Convex Portion: 90 nm,
Height of Convex Portion: 180 nm,
Shape of Cross Section in Concave Portion: Rectangular
Observing a shape of the substrate released from the mold, it was learned that a linear pattern having a cross section of just about a reversal shape of the mold was obtained as follows.

"Pattern of Substrate"

Pitch p: 150 nm, Width w: 60 nm, Height h: 170 nm
Then aluminum deposition was conducted from a direction which is perpendicular to a longitudinal direction of a linear pattern and diagonal at 30° from a substrate surface. As a result, a metal layer was formed only on an apex and upper part of one side of a convex portion, and the thickness thereof was 50 nm at the apex of the convex portion and the total width TW was 75 nm.
The evaluation results are shown in Table 1. A polarizer exhibiting a high brightness enhanced effect was obtained.

(Example 8)

A biaxially stretched polyethylene terephthalate sheet "Lumirror" U10 (manufactured by Toray Industries Inc.) 188 $\mu$m in film thickness, on which a resin layer comprising a polyester resin "Eritel" UE3600 (manufactured by Unitika Ltd.) was formed in a thickness of 5 $\mu$m, was used as a substrate, and the substrate and the mold 3 were superimposed. After vacuuming until the vacuum degree became 50 Pa or less, the substrate and the mold were preheated at 110°C for 5 minutes, pressed at a press temperature of 110°C under a press pressure of 13 MPa for 5 minutes and cooled down to 70°C, and the pressure was released so as to release the substrate from the mold.
Observing a shape of the substrate released from the mold, it was learned that a linear pattern having a cross section of just about a reversal shape of the mold was obtained as follows.

"Pattern of Substrate"

Pitch p: 150 nm, Width w: 60 nm, Height h: 165 nm
Then, aluminum was deposited at vacuum on an entire surface with concavity and convexity to be formed thereon, so as to form a metal layer as shown in Fig. 4(b) and Fig. 4(d). Incidentally, a thickness of the metal layer was 60 nm at both an apex of a convex portion and a bottom of a concave portion.
The evaluation results are shown in Table 1. A polarizer exhibiting high brightness enhanced effect was obtained.

(Example 9)

A biaxially stretched polyethylene terephthalate sheet "Lumirror" U10 (manufactured by Toray Industries Inc.) 125 $\mu$m in thickness, on which a resin layer comprising a polyester resin OKP-4 (manufactured by Osaka Gas Chemicals Co. Ltd.) was formed in a thickness of 30 $\mu$m, was used as a substrate, and the substrate and the following mold 4 were superimposed. After vacuuming until the vacuum degree became 50 Pa or less, the substrate and the mold were preheated at 160°C for 2 minutes, pressed at a press temperature of 160°C under a press pressure of 10 MPa for 5 minutes and cooled down to 90°C, and the pressure was released so as to release the substrate from the mold.

" mold 4"

Material: Nickel, Size: 30 mm square
Pitch: 200 nm, Width of Convex Portion: 142 nm,
Height of Convex Portion: 100 nm,
Shape of Cross Section in Concave Portion: Trapezoid (Apex Width: 135 nm, Bottom Width: 150 nm)
Observing a shape of the substrate released from the mold, it was learned that a linear pattern having a cross section of just about a reversal shape of the mold was obtained as follows.

"Pattern of Substrate"

Pitch p: 200 nm, Width w: 58 nm (Apex Width: 50 nm, Bottom Width: 65 nm), Height h: 100 nm
Then aluminum deposition was conducted from a direction which is perpendicular to a longitudinal direction of a linear pattern and diagonal at 45° from a substrate surface. As a result, a metal layer was formed only on a periphery of a convex portion of a pattern, and the thickness thereof was 60 nm and the total width TW was 70 nm.
The evaluation results are shown in Table 1. A polarizer exhibiting a high brightness enhanced effect was obtained.

(Example 10)

A substrate having a linear pattern was obtained in the same manner as in Example 9 except for using the following mold 5.

"mold 5"

Material: Nickel, Size: 30 mm square
Pitch: 200 nm, Width of Convex Portion: 135 nm,
Height of Convex Portion: 200 nm,
Shape of Cross Section in Concave Portion: Trapezoid (Apex Width: 120 nm, Bottom Width: 150 nm)
Observing a shape of the substrate released from the mold, it was learned that a linear pattern having a cross section of just about a reversal shape of the mold was obtained as follows.

"Pattern of Substrate"

Pitch p: 200 nm, Width w: 65 nm (Apex Width: 50 nm, Bottom Width: 80 nm), Height h: 200 nm
Then aluminum deposition was conducted from a direction which is perpendicular to a longitudinal direction of a linear pattern and diagonal at 45° from a substrate surface. As a result, a metal layer was formed only on a periphery of a convex portion of a pattern, and the thickness thereof was 60 nm at an apex of a convex portion and the total width TW was 70 nm.
The evaluation results are shown in Table 1. A polarizer exhibiting a high brightness enhanced effect was obtained.

(Example 11)

A glass substrate 1737 (manufactured by Corning Ltd.) 0.6 mm in thickness, on which a resin layer comprising a polyester resin OKP-4 (manufactured by Osaka Gas Chemicals Co. Ltd.) was formed in a thickness of 30 $\mu$m, was used as a substrate, and the substrate and the mold 5 were superimposed. After vacuuming until the vacuum degree became 50 Pa or less, the substrate and the mold were preheated at 160°C for 2 minutes, pressed at a press temperature of 160°C under a press pressure of 10 MPa for 5 minutes and cooled down to 90°C, and the pressure was released so as to release the substrate from the mold.
Observing a shape of the substrate released from the mold, it was learned that a linear pattern having a cross section of just about a reversal shape of the mold was obtained as follows.

"Pattern of Substrate"

Pitch p: 200 nm, Width w: 65 nm (Apex Width: 50 nm, Bottom Width: 80 nm), Height h: 200 nm

Then aluminum deposition was conducted from a direction which is perpendicular to a longitudinal direction of a linear pattern and diagonal at 45° from a substrate surface. As a result, a metal layer was formed only on a periphery of a convex portion of a pattern, and the thickness thereof was 60 nm at an apex of a convex portion and the total width TW was 70 nm.

The evaluation results are shown in Table 1. A polarizer exhibiting a high brightness enhanced effect was obtained.

(Example 12)

A chip mixed by 12% by weight of PET, 58% by weight of a polyester resin in which an isophthalic acid component of 17 mol% was copolymerized with PET, 30% by weight of a polyester resin in which cyclohexane dimethanol of 33 mol% was copolymerized with PET and 0.5% by weight of polymethylpentene was supplied in a main extruder (B layer), and PET was supplied in an auxiliary extruder (A layer). Melt extrusion of a three layer lamination (three layer of A/B/A, lamination ratio of 1/8/1) was conducted at 280°C, which was cast on a mirror drum cooled at 25°C under electrostatic application so as to fabricate an extruded sheet. The sheet was preheated by a group of rollers heated at 90°C, and stretched 3.5 times in the longitudinal direction at 95°C. Then, the sheet was guided into a tenter heated at 95°C by holding the end of the sheet with a grip, preheated for 5 seconds, and continuously stretched 3.5 times in the width direction in an atmosphere at 110°C. Furthermore, it was subjected to continuous heat treatment in an atmosphere at 235°C for 20 seconds so as to fabricate a sheet having a film thickness of 125 $\mu$m.

Then, a resin layer comprising a polyester resin OKP-4 (manufactured by Osaka Gas Chemicals Co. Ltd.) was formed on one side of the resulting sheet in a thickness of 30 $\mu$m, which was superimposed with the mold 5. After vacuuming until the vacuum degree became 50 Pa or less, the substrate and the mold were preheated at 160°C for 2 minutes, pressed at a press temperature of 160°C under a press pressure of 10 MPa for 5 minutes and cooled down to 90°C, and the pressure was released so as to release the substrate from the mold.

Observing a shape of the substrate released from the mold, it was learned that a linear pattern having a cross section of just about a reversal shape of the mold was obtained as follows.

"Pattern of Substrate"

Pitch p: 200 nm, Width w: 65 nm (Apex Width: 50 nm, Bottom Width: 80 nm), Height h: 200 nm
Then chromium deposition was conducted from a direction which is perpendicular to a longitudinal direction of a linear pattern and diagonal at 60° from a substrate surface. As a result, a metal layer was formed only on a periphery of a convex portion of a pattern, and the thickness thereof was 50 nm at an apex of a convex portion and the total width TW was 65 nm.

The evaluation results are shown in Table 1. It was learned that a high brightness enhanced effect was exhibited and glaring in a plane was suppressed.

(Comparative Example 1)

A substrate having a linear pattern was fabricated in the same manner as in Example 1 except for using the following mold 6 instead of a mold 1.

" mold 6"

Material: Nickel, Size: 30 mm square
Pitch: 500 nm, Width of Convex Portion: 250 nm,
Height of Convex Portion: 200 nm,
Shape of Cross Section in Concave Portion: Rectangular

Observing a shape of the substrate released from the mold, it was learned that a linear pattern having a cross section of just about a reversal shape of the mold was obtained as follows.

"Pattern of Substrate"

Pitch p: 500 nm, Width w: 240 nm, Height h: 190 nm

Then, aluminum was vacuum deposited over an entire surface with concavity and convexity to be formed thereon, and a metal layer shown in Fig. 4(b) and Fig. 4(d) was formed. Incidentally, the thickness of the metal layer was 80 nm at both an apex of the convex portion and a bottom of the concave portion.

The evaluation results are shown in Table 1. The results were insufficient in terms of wavelength dependency, polarization degree and brightness enhanced ratio.

Table 1

| | Shape of linear pattern | | | | | | Thickness of metal layer (nm) | Total width of metal layer and convex portion TW (nm) | Transmittance | Wavelength dependency | Polarization degree | Brightness enhanced ratio (%) |
|---|---|---|---|---|---|---|---|---|---|---|---|---|
| | Pitch p (nm) | Width w (nm) | Height h (nm) | h/w | h/(p-w) | w/p | | | | | | |
| Example 1 | 400 | 190 | 190 | 1 | 0.9 | 0.48 | 80 | - | A | B | B | B |
| Example 2 | 400 | 190 | 190 | 1 | 0.9 | 0.48 | 210 | - | B | B | B | B |
| Example 3 | 200 | 90 | 135 | 1.5 | 1.23 | 0.45 | 40 | - | A | A | B | A |
| Example 4 | 200 | 90 | 135 | 1.5 | 1.23 | 0.45 | 30 | 110 | A | A | B | A |
| Example 5 | 200 | 90 | 130 | 1.44 | 1.18 | 0.45 | 50 | 115 | A | A | A | A |
| Example 6 | 200 | 100 | 100 | 1 | 1 | 0.5 | 50 | - | B | B | B | A |
| Example 7 | 150 | 60 | 170 | 2.83 | 1.89 | 0.4 | 50 | 75 | A | A | A | A |
| Example 8 | 150 | 60 | 165 | 2.75 | 1.83 | 0.4 | 60 | - | A | A | A | A |
| Example 9 | 200 | 58 | 100 | 1.72 | 0.7 | 0.29 | 60 | 70 | A | A | A | A |
| Example 10 | 200 | 65 | 200 | 3.08 | 1.48 | 0.33 | 60 | 70 | A | A | A | S |
| Example 11 | 200 | 65 | 200 | 3.08 | 1.48 | 0.33 | 60 | 70 | A | A | A | A |
| Example 12 | 200 | 65 | 200 | 3.08 | 1.48 | 0.33 | 50 | 65 | B | A | A | A |
| Comparative Example 1 | 500 | 240 | 190 | 0.8 | 0.73 | 0.48 | 80 | - | B | C | C | C |

INDUSTRIAL APPLICABILITY

A polarizer of the present invention is suited for an optical member enhancing brightness of various liquid crystal display devices, particularly liquid crystal display devices.

**Claims**

1. A polarizer comprising a substrate that has a parallel linear pattern composed of concave portions and convex portions and a metal layer formed on a surface side having the linear pattern of the substrate, wherein the convex portions are formed with widths of w = 20 to 380 nm and pitches of p = 50 to 400 nm.

2. The polarizer according to claim 1, wherein a height h of the convex portion is from 10 to 400 nm.

3. The polarizer according to claim 1, wherein the ratio (h/w) of the height h to the width w of the convex portion is from 0.5 to 5.

4. The polarizer according to claim 1, wherein a thickness of the metal layer is from 10 to 200 nm.

5. The polarizer according to claim 1, wherein a thickness of the metal layer formed on the concave portion of the linear pattern does not exceed the height h of the convex portion.

6. The polarizer according to claim 1, wherein at least a surface layer of the substrate containing the linear pattern is composed of any of thermoplastic resin, photocurable resin or thermosetting resin or a resin composition containing a mixture thereof.

7. The polarizer according to claim 1, wherein the substrate is a multilayer structure which at least comprises a first layer containing the linear pattern and a second layer serving as a supporting material.

8. The polarizer according to claim 7, wherein the second layer is a uniaxially or biaxially stretched polyester polymer sheet.

9. A method for producing polarizer that is a method for producing the polarizer according to claim 1, comprising the following step (i) or (ii):

   (i) a step of forming a linear pattern on a substrate surface, and then forming a metal layer on the surface side having the linear pattern of the substrate,
   (ii) a step of forming a metal layer on a substrate surface, then forming a linear pattern on the substrate, and thereby providing the metal layer on the linear pattern.

10. The method for producing polarizer according to claim 9, wherein the linear pattern is formed by means of a mold transfer method.

11. A liquid crystal display device, comprising at least a flat light source unit, a polarizer (A) according to claim 1, and a liquid crystal cell that are disposed in this order, wherein the liquid crystal cell has a liquid crystal layer and polarizers (B), (C) disposed so that the polarizers (B), (C) sandwich the liquid crystal layer, and a direction of a polarized axis of a polarized light transmitted through the polarizer (B), constituting the liquid crystal cell and disposed on the flat light source unit side, and a direction of a polarized axis of polarized light transmitted through the polarizer (A) are conformed.

12. The liquid crystal display device according to claim 12, wherein the polarizer (A) is disposed so that the metal layer faces the liquid crystal cell.

EP 1 840 603 A1

Fig.1

(a)

(b)

Fig.2

(a)

(b)

(c)

(d)

(e)

Fig.3

(a)

(b)

(c)

(d)

(e)

EP 1 840 603 A1

EP 1 840 603 A1

Fig.4

(a)

2
100
1

(c)

2
100
1

(b)

2
100
1

(d)

2
t
13  1
100

Fig.5

EP 1 840 603 A1

Fig.6

EP 1 840 603 A1

<div align="center">

**INTERNATIONAL SEARCH REPORT**

</div>

| | International application No. |
|---|---|
| | PCT/JP2005/022424 |

**A. CLASSIFICATION OF SUBJECT MATTER**
*G02B5/30*(2006.01), *G02F1/1335*(2006.01)

According to International Patent Classification (IPC) or to both national classification and IPC

**B. FIELDS SEARCHED**

Minimum documentation searched (classification system followed by classification symbols)
*G02B5/30*(2006.01), *G02F1/1335*(2006.01)

Documentation searched other than minimum documentation to the extent that such documents are included in the fields searched
Jitsuyo Shinan Koho      1922-1996    Jitsuyo Shinan Toroku Koho    1996-2006
Kokai Jitsuyo Shinan Koho   1971-2006    Toroku Jitsuyo Shinan Koho    1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-502708 A (MOXTEK),<br>21 January, 2003 (21.01.03),<br>Par. Nos. [0026] to [0039]; Figs. 4, 9<br>& US 6122103 A1        & WO 00/79317 A1 | 1-8<br>11-12 |
| Y | JP 2001-330728 A (Nippon Bunko Kabushiki Kaisha),<br>30 November, 2001 (30.11.01),<br>Claims; Fig. 1<br>& EP 1158319 A2         & US 2001/0053023 A1 | 1-6,9-10 |
| Y | JP 2002-357716 A (Mitsubishi Chemical Corp.),<br>13 December, 2002 (13.12.01),<br>Par. Nos. [0028], [0032] to [0037]<br>(Family: none) | 1-6,9-10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 March, 2006 (24.03.06) | 04 April, 2006 (04.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2005/022424 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-69835 A  (Sharp Corp.),<br>04 March, 2004 (04.03.04),<br>Par. Nos. [0021], [0030]; Fig. 2<br>(Family: none) | 11-12 |
| P,X | JP 2005-128228 A  (Hitachi Maxell, Ltd.),<br>19 May, 2005 (19.05.05),<br>Par. No. [0015]; Fig. 3<br>(Family: none) | 1-7,9-10 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003511729 W
- JP 2002090533 A
- JP 2001074935 A